# EUROPEAN PATENT APPLICATION

(11) **EP 1 930 817 A1**
(43) Date of publication of application: **11.06.2008**
(21) Application number: 07023535.3
(22) Date of filing: 05.12.2007
(51) Int. Cl.: G06F 17/30

(54) **Method and apparatus for managing geographic information system data**

(30) Priority: 07.12.2006 US 608129
(71) Applicant: The Boeing Company, Chicago, IL 60606-2016 (US)
(72) Inventor: Pschierer, Christian, 97199 Ochsenfurt (DE)
(74) Representative: Lindner, Michael

(57) **Abstract**

A computer implemented method, apparatus, and computer usable program code for managing data in an airport mapping database. A notice of an update is received to data relating to a set of elements at an airport, wherein the notice includes a attribute value change for the set of elements, an effective period of time for the attribute value change, and a geometric feature associated with the set of elements in the airport mapping database that is to be updated. The set of elements is located in the airport mapping database using the geometric feature. The set of elements is updated using the attribute value change, wherein the attribute value change is reflected in results returned in response to queries made during the effective period of time.

## Description

### BACKGROUND INFORMATION

### 1. Field of Invention:

The present invention relates generally to an improved data processing system, and in particular, to a method and apparatus for processing data. Still more particularly, the present invention relates to a computer implemented method, apparatus, and computer usable program code updating geographic information system data.

### 2. Background Description:

Geographic information system data represents real world objects, such as, roads, land use, and elevation, using digital data. This data may relate information about a real world object to a digital representation of the real world object. For example, a digital image of a runway at an airport may be used to generate a map of the runway. The map may be generated through other input, such as from measurements of the runway. Additionally, a dataset consisting of a geometry, such as a runway polygon, may be associated with information, such as elevation, surface material or pavement strength. This information is also referred to as "attributes", which may be stored in a database that may be queried as well as analyzed.

Database systems have been developed using these models. The databases are often referred to as airport mapping databases (AMDBs). Airlines, traffic controllers, pilots, and other entities use the information from these databases in moving map displays or for identifying certain properties of different aeronautical elements, such as open/closed attribute value or a maximum wingspan for an aircraft on runways and taxiways.

One implementation of a geographic information system for aeronautical use is the aeronautical information conceptual model (AICM) and the aeronautical information exchange model (AIXM). The aeronautical information conceptual module is a conceptual/logical model that uses entities, attributes, and relationships to describe aeronautical features, such as runways, airports, navaids, obstacles, routes, terminal procedures, air space structures, services, and related aeronautical data. The aeronautical information exchange model is a data exchange specification. This specification uses extensible markup language technology to define features and messages used to exchange information about the aeronautical data contained in the aeronautical information conceptual model. These models were originally developed by Eurocontrol, which is the European organization for the safety of air navigation. This organization is a civil and military organization that contains thirty-seven number states with an objective of developing a seamless air traffic management system.

NOTAM is the quasi-acronym for a "Notice To Airmen". NOTAMs are created and transmitted by government agencies under guidelines specified by Annex 15: Aeronautical Information Services of the International Convention on Civil Aviation. A NOTAM is filed with an aviation authority to alert aircraft pilots of any hazards en route or at a specific location. The authority in turn provides means of disseminating relevant NOTAMs to pilots. NOTAMs are issued and reported for a number of reasons, such as closed runways or temporary erection of obstacles, such as a crane, near an airfield. AICM/AIXM includes an electronically coded NOTAM in an extensible markup language format. This type of message is referred to as an xNOTAM and is regarded as a delta or incremental updated data for the database. As for all incremental updates, a unique key is used to identify the affected information in the database.

The keys for identifying elements of AMDBs are derived from attributes from elements in an airport mapping database. These keys are not always unique. As a result, if an update is provided from a source other than the database originator, the update may refer to more than one element or an entirely different element in the database if the keys are not unique. One mechanism currently used is to add a unique numerical attribute to each element for use in generating unique keys. This type of solution is usable only if the updates are received from the same provider of the original data sets or if the unique elements have been shared by different providers. Otherwise, the unique key is useless, and the same problem with referencing more than one element or a different element in the airport mapping database may occur.

Therefore, it would be advantageous to have an improved computer implemented method, apparatus, and computer usable program code for identifying elements in an airport mapping database.

### SUMMARY OF THE INVENTION

An embodiment of the present invention provides a computer implemented method, apparatus, and computer usable program code for managing data in an airport mapping database. A notice of an update is received to data relating to a set of elements at an airport, wherein the notice includes an attribute value change for the set of elements, an effective period of time for the attribute change, and a geometric feature associated with the set of elements in the airport mapping database that is to be updated. The set of elements is located in the airport mapping database using the geometric feature. The set of elements is updated using the changed attribute, wherein the changed attribute is reflected in results returned in response to queries made during the effective period of time.

Another embodiment of the present invention provides a computer implemented method, apparatus, and computer usable program code for managing updates to a geographic information system database. A notice of an update to data in the geographic information system database is received. An element in the geographic information system database is located using the geometric feature received in the notice. The set of elements is updated using update data.

The features, functions, and advantages can be achieved independently in various embodiments of the present invention or may be combined in yet other embodiments.

### BRIEF DESCRIPTION OF THE DRAWINGS

The novel features believed characteristic of the invention are set forth in the appended claims. The invention itself, however, as well as a preferred mode of use, further objectives and advantages thereof, will best be understood by reference to the following detailed description of an advantageous embodiment of the present invention when read in conjunction with the accompanying drawings, wherein:

**Figure 1** is a pictorial representation of a network of data processing systems in which the advantageous embodiments of the present invention may be implemented;

**Figure 2** is a block diagram of a data processing system in which the advantageous embodiments of the present invention may be implemented;

**Figure 3** is a diagram illustrating a geographic information system database in accordance with an advantageous embodiment of the present invention;

**Figure 4** is an example of a record in accordance with an advantageous embodiment of the present invention;

**Figure 5** is a diagram of a display generated using an airport mapping database in accordance with an advantageous embodiment of the present invention;

**Figure 6** is a diagram of elements in an airport mapping database presented in a display in accordance with an advantageous embodiment of the present invention;

**Figure 7** is a diagram illustrating a data structure containing an update in accordance with an advantageous embodiment of the present invention;

**Figure 8** is a diagram of runways and taxiways presented in a display in accordance with an advantageous embodiment of the present invention;

**Figure 9** is a diagram illustrating a data structure containing an update in accordance with an advantageous embodiment of the present invention;

**Figure 10** is a diagram illustrating a display runway and taxiways in accordance with an advantageous embodiment of the present invention;

**Figure 11** is a diagram of a data structure containing update information in accordance with an advantageous embodiment of the present invention;

**Figure 12** is a flowchart of a process for updating records in a database in accordance with an advantageous embodiment of the present invention; and

**Figure 13** is a flowchart of a process for creating a notice containing an update in accordance with an advantageous embodiment of the present invention.

### DETAILED DESCRIPTION OF THE INVENTION

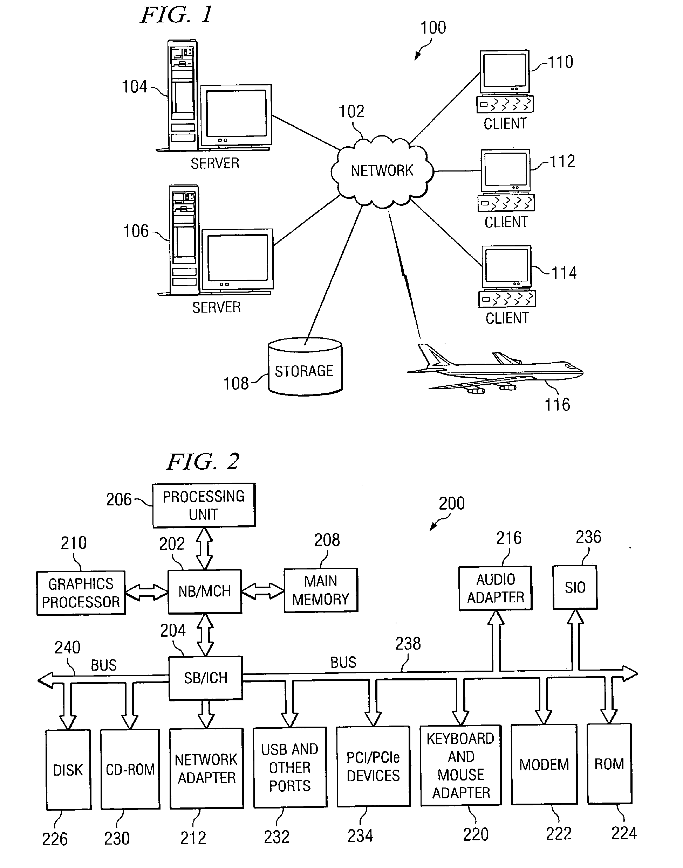

With reference now to the figures and in particular with reference to **Figures 1-2****,** exemplary diagrams of data processing environments are provided in which the advantageous embodiments of the present invention may be implemented. It should be appreciated that **Figures 1-2** are only exemplary and are not intended to assert or imply any limitation with regard to the environments in which different embodiments may be implemented. Many modifications to the depicted environments may be made.

With reference now to the figures, **Figure 1** depicts a pictorial representation of a network of data processing systems in which the advantageous embodiments of the present invention may be implemented. Network data processing system **100** is a network of computers in which embodiments may be implemented. Network data processing system **100** contains network **102,** which is the medium used to provide communications links between various devices and computers connected together within network data processing system **100.** Network **102** may include connections, such as wire, wireless communication links, or fiber optic cables. In the depicted example, server **104** and server **106** connect to network **102** along with storage unit **108.** In addition, clients **110, 112,** and **114** connect to network **102.** These clients **110, 112,** and **114** may be, for example, personal computers or network computers. In the depicted example, server **104** provides data, such as boot files, operating system images, and applications to clients **110, 112,** and **114.** Clients **110, 112,** and **114** are clients to server **104** in this example. In these examples, server **104,** server **106,** client **110,** client **112,** and client **114** may be computers in an airport or network of airports in which servers **104** and **106** contain airport mapping databases used by the clients. Network data processing system **100** may include additional servers, clients, and other devices not shown.

Additionally, aircraft **116** also may receive information from server **104** or **106** through a wireless communications link (in-flight) or any other data link on the ground. Alternatively, aircraft **116** may include an airport mapping database and receive updates from servers **104** and **106** for guarding changes in conditions of different aeronautical elements.

In the depicted example, network data processing system **100** is the Internet with network **102** representing a worldwide collection of networks and gateways that use the Transmission Control Protocol/Internet Protocol (TCP/IP) suite of protocols to communicate with one another. Of course, network data processing system **100** also may be implemented as a number of different types of networks, such as for example, an intranet, a local area network (LAN), or a wide area network (WAN). **Figure 1** is intended as an example, and not as an architectural limitation for different embodiments.

With reference now to **Figure 2****,** a block diagram of a data processing system is shown in which the advantageous embodiments of the present invention may be implemented. Data processing system **200** is an example of a computer, such as server **104** or client **110** in **Figure 1****,** in which computer usable code or instructions implementing the processes may be located for the illustrative embodiments.

In the depicted example, data processing system 200 employs a hub architecture including a north bridge and memory controller hub (MCH) **202** and a south bridge and input/output (I/O) controller hub (ICH) **204.** Processing unit **206,** main memory **208,** and graphics processor **210** are coupled to north bridge and memory controller hub **202.** Processing unit **206** may contain one or more processors and even may be implemented using one or more heterogeneous processor systems. Graphics processor **210** may be coupled to the MCH through an accelerated graphics port (AGP), for example.

In the depicted example, local area network (LAN) adapter **212** is coupled to south bridge and I/O controller hub **204** and audio adapter **216,** keyboard and mouse adapter **220,** modem **222,** read only memory (ROM) **224,** universal serial bus (USB) ports and other communications ports **232,** and PCI/PCIe devices **234** are coupled to south bridge and I/O controller hub **204** through bus **238,** and hard disk drive (HDD) **226** and CD-ROM drive **230** are coupled to south bridge and I/O controller hub **204** through bus **240.** PCI/PCIe devices may include, for example, Ethernet adapters, add-in cards, and PC cards for notebook computers. PCI uses a card bus controller, while PCIe does not. ROM **224** may be, for example, a flash binary input/output system (BIOS). Hard disk drive **226** and CD-ROM drive **230** may use, for example, an integrated drive electronics (IDE) or serial advanced technology attachment (SATA) interface. A super I/O (SIO) device **236** may be coupled to south bridge and I/O controller hub **204.**

An operating system runs on processing unit **206** and coordinates and provides control of various components within data processing system **200** in **Figure 2****.** The operating system may be a commercially available operating system such as Microsoft^{®} Windows^{®} XP (Microsoft and Windows are trademarks of Microsoft Corporation in the United States, other countries, or both). An object oriented programming system, such as the Java^{™} programming system, may run in conjunction with the operating system and provides calls to the operating system from Java programs or applications executing on data processing system **200.** Java and all Java-based trademarks are trademarks of Sun Microsystems, Inc. in the United States, other countries, or both.

Instructions for the operating system, the object-oriented programming system, and applications or programs are located on storage devices, such as hard disk drive **226,** and may be loaded into main memory **208** for execution by processing unit **206.** The processes of the illustrative embodiments may be performed by processing unit **206** using computer implemented instructions, which may be located in a memory such as, for example, main memory **208,** read only memory **224,** or in one or more peripheral devices.

The hardware in **Figures 1-2** may vary depending on the implementation. Other internal hardware or peripheral devices, such as flash memory, equivalent non-volatile memory, or optical disk drives and the like, may be used in addition to or in place of the hardware depicted in **Figures 1-2****.** Also, the processes of the illustrative embodiments may be applied to a multiprocessor data processing system.

A bus system may be comprised of one or more buses, such as a system bus, an I/O bus and a PCI bus. Of course the bus system may be implemented using any type of communications fabric or architecture that provides for a transfer of data between different components or devices attached to the fabric or architecture. A communications unit may include one or more devices used to transmit and receive data, such as a modem or a network adapter. A memory may be, for example, main memory **208** or a cache such as found in north bridge and memory controller hub **202.** A processing unit may include one or more processors or CPUs. The depicted examples in **Figures 1-2** and above-described examples are not meant to imply architectural limitations. For example, data processing system **200** also may be a tablet computer, laptop computer, or telephone device in addition to taking the form of a PDA.

The different advantageous embodiments recognize that current systems for updating data in a geographic information system database, such as an airport mapping database, is difficult without unique keys. Thus, the different advantageous embodiments provide a computer implemented method, apparatus, and computer usable program code for managing data in a geometric information system database. A notice used to update data in a database, such as an airport mapping database, includes update data containing a geometric feature associated with an element in an airport mapping database that is to be updated using the update data. The element, in these examples, is located in the airport mapping database using this geometric feature as a unique key. The element is then updated using the update data.

In these depicted examples, the updates take the form of a notice to airmen (NOTAM). In particular, this notice is electronically coded in an extensible markup language format in these depicted examples. This type of message is referred to as an xNOTAM and is regarded as a delta or incremental updated data for the database in the illustrative examples. As for all incremental updates, the unique key is used to identify the affected information in the database. In these examples, the unique key involves the use of geo-spatial key. This key includes a geometric feature that is used to uniquely identify an aeronautical element in these examples. The aeronautical element may be, for example, a runway, a taxiway, or a parking stand.

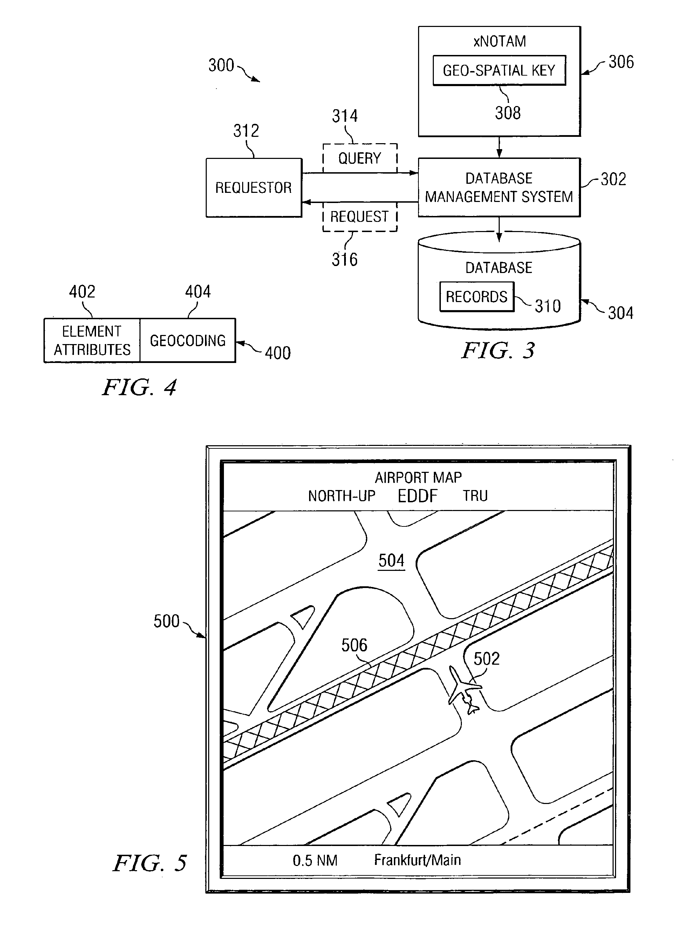

Turning now to **Figure 3****,** a diagram illustrating a geographic information system database is depicted in accordance with an advantageous embodiment of the present invention. In this example, this database takes the form of airport mapping database **300,** which includes database management system **302** and database **304.** Database management system **302** is software designed to manage database **304.** Database management system **302** may perform various operations on database **304.** For example, database management system **302** may be used to add or update data within database **304.** Database **304** is a collection of records or information organized in a manner that may be queried or analyzed.

In these examples, database management system **302** receives xNOTAM **306,** which is an update to a set of elements stored in records within database **304.** This set of elements is one or more elements. In these particular examples, xNOTAM **306** contains geo-spatial key **308,** which is used to uniquely identify an element in a record stored in database **304.** Geo-spatial key **308** uses a geometric feature to identify an element. This geometric feature may be, for example, a point, a line, or a polygon. In these examples, the point, the line, or the polygon is defined using coordinates, such as, longitude and latitude.

Database management system **302** takes geo-spatial key **308** along with other attributes in xNOTAM **306** to identify one or more of records **310** in database **304** to update. In this manner, geo-spatial key **308** provides a unique way to identify each element within records **310** in database **304.** As a result, requestor **312** may send query **314** to database management system **302** to obtain information from database **304.** One or more records, such as records **310** are retrieved and returned in request **316** by database management system **302** to requestor **312.** In these examples, requestor **312** may be a software program or component located at an airline, air traffic control tower, or aircraft.

The result of a request may be displayed in a map or other graphical display. Alternatively, this information may be used to modify processes, such as routing systems in an aircraft.

Turning now to **Figure 4****,** an example of the record is depicted in accordance with an advantageous embodiment of the present invention. As illustrated, record **400** is an example of the record in records **310** within database **304** in **Figure 3****.** In this illustrative example, record **400** includes element attributes **402** and geocoding **404.** Element attributes **402** in these examples are information describing the particular element. For example, element attributes **402** may include an identification of the type of element, such as a runway or taxiway and further data describing this element such as, for example, the name of the element, material, elevation or status. Element attributes **402** may include anything about the element that is subject to change. Additionally, this information also may identify the airport at which the element is located. Geocoding **404** contains the geometry object associated with the elements. These geometries may be, for example, geographic coordinates, such as coordinates expressed in latitude and longitude. When geographic coordinates are used in geocoding **404,** these coordinates may define the outline of the particular element in case it is an area element, or a line or a point. The element may be for example, a runway or a portion of a runway.

Additionally, depending on the particular implementation, record **400** also may include a beginning and ending time for the complete record or for one or more particular attributes if those elements are temporary ones. In some cases the period of time may be permanent one in which a beginning time is present, but no ending time is set.

The geo-spatial key received in xNOTAM, such as xNOTAM **306** in **Figure 3****,** is used to determine whether a particular record corresponds to the geo-spatial key. For example, if the geo-spatial key takes the form of a line, the determination may be made as to whether geocoding **404** intersects the line. In another example, the geo-spatial key may be a polygon. With this type of example, a determination may be made as to whether geocoding **404** intersects the polygon or is entirely encompassed by the polygon to determine whether record **400** should be retrieved for modification. The determination also may be made as to whether geocoding **404** overlaps or touches the geo-spatial key.

Turning now to **Figure 5****,** a diagram of a display generated using an airport mapping database is depicted in accordance with an advantageous embodiment of the present invention. Display **500** is generated using information from a database, such as database **304,** using database management system **302** both in **Figure 3****.**

In this example, display **500** is an airport mapping database display in an airport moving map. In this example, the position of an aircraft is shown using aircraft icon **502,** which moves with respect to map **504** as the aircraft moves. In this particular example, a notice to airmen is presented in which information indicates that runway **506** is closed.

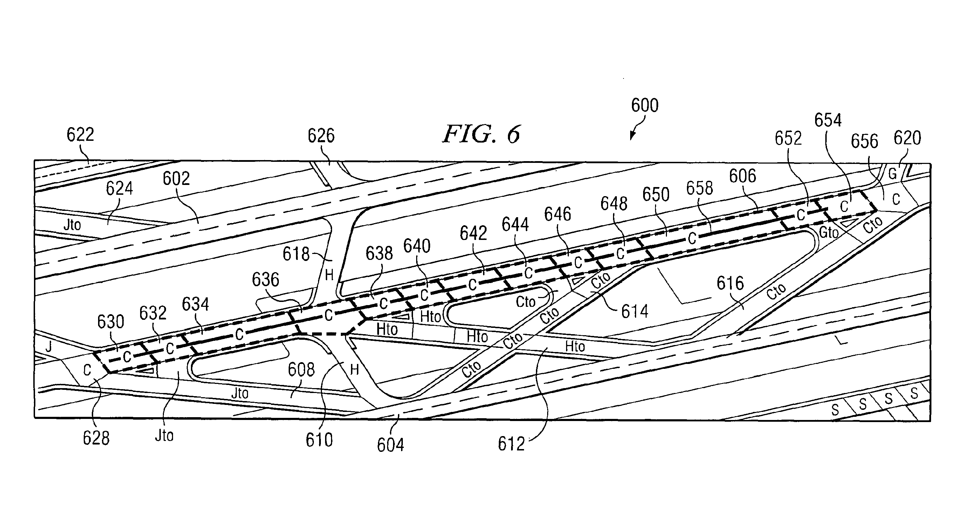

Turning now to **Figure 6****,** a diagram of elements in an airport mapping database presented in a display is depicted in accordance with an advantageous embodiment of the present invention. In this example, display **600** is a presentation of different elements in an airport mapping database. In this example, the elements include runway **602** and runway **604.** Additionally, taxiways **606, 608, 610, 612, 614, 616, 618, 620, 622, 624,** and **626** are illustrated. These elements for the taxiway are polygons for the taxiway. Each taxiway and runway may be described using elements that form a particular runway or taxiway. For example, taxiway **606** includes elements **628, 630, 632, 634, 636, 638, 640, 642, 644, 646, 648, 650, 652, 654,** and **656.** In this particular example, a portion of taxiway 606 is closed based on an xNOTAM that has been received. In the depicted example, the elements that are closed are elements **630, 632, 634, 636, 638, 640, 642, 644, 646, 648, 650, 652,** and **654.**

These portions are identified using a geo-spatial key. This geo-spatial key takes the form of line **658.** Each element in taxiway **606** intersecting line **658** is closed based on the xNOTAM that has been received. The identification of these elements is made by determining which elements within the database intersect line **658.** Line **658,** in these examples, is defined using a set of coordinates. The geographic coordinates defining the different elements in the database are compared to this line to determine whether intersections between line **658** and the different elements occur.

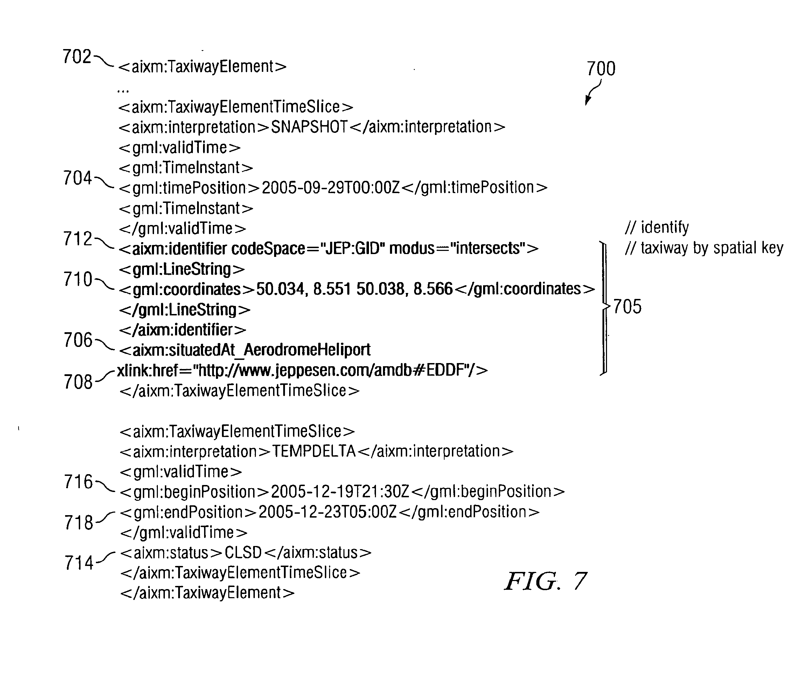

Turning now to **Figure 7****,** a diagram illustrating a data structure containing an update is depicted in accordance with an advantageous embodiment of the present invention. In this particular example, data structure **700** is an xNOTAM. Data structure **700** is an example of data formatted using extensible markup language in these examples. Line **702** identifies this update as affecting a taxiway. Line **704** identifies the time when data structure **700** was generated. Section **705** identifies the particular taxiway or portions of the taxiway that are affected by this update. Lines **706** and **708** in data structure **700** identify the taxiway in the manner normally used. These lines contain an airport and identifier.

Line **710** in section **705** includes a geo-spatial key. In this example, the geo-spatial key takes the form of a line with two sets of coordinates defining the end points of the line. Line **712** indicates that any element in the taxiway intersecting this line is affected by the update. Line **714** in data structure **700** indicates that the update is to set the status attribute of the taxiway to "closed". This closure is valid between the times specified in lines **716** and **718.**

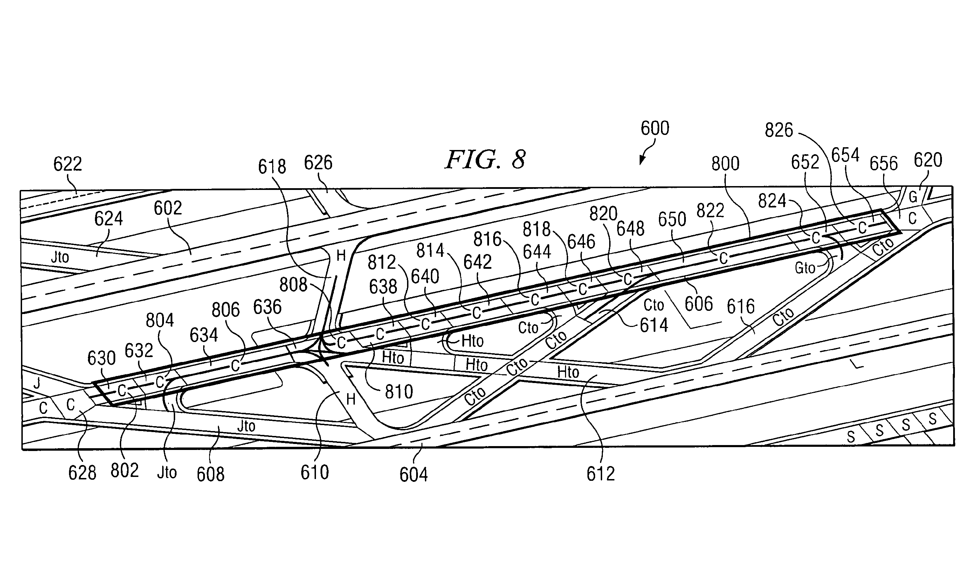

Turning now to **Figure 8****,** a diagram of runways and taxiways presented in a display is depicted in accordance with an advantageous embodiment of the present invention. As illustrated, display **600** indicates that taxiway guidance lines are closed and not be used. In this example, polygon **800** is used in display **600** to indicate that elements **802, 804, 806, 808, 810, 812, 814, 816, 818, 820, 822, 824** and **826** in taxiway **606** are closed. The sections that are affected by this polygon are ones that intersect the polygon.

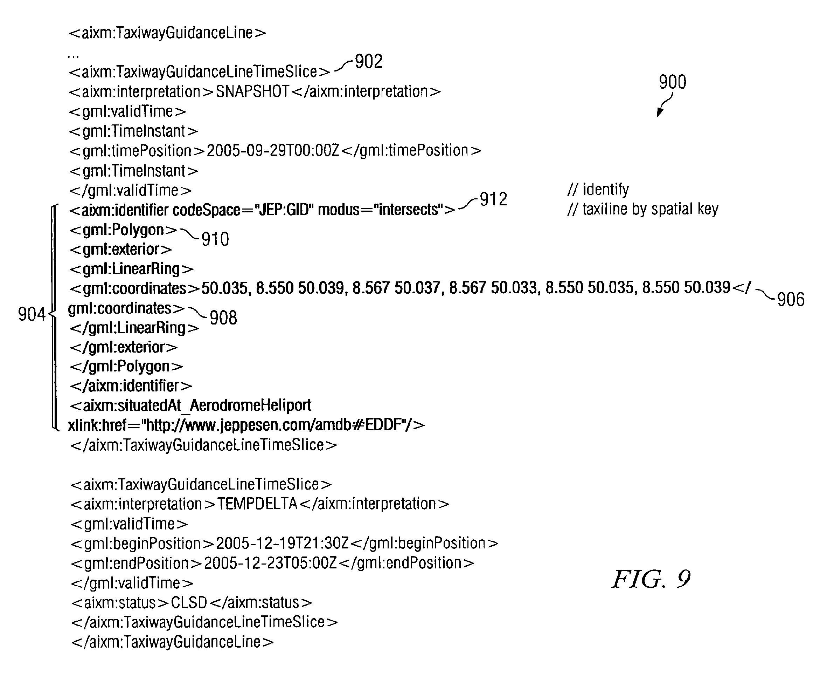

Turning now to **Figure 9****,** a diagram of a data structure containing an update is depicted in accordance with an advantageous embodiment of the present invention. In this example, data structure **900** is an extensible markup language data structure for a xNOTAM. Line **902** indicates that the type of element is for a taxiway guidance line. Section **904** contains the identification of the element. In these examples, this section includes a geo-spatial key as shown in lines **906** and **908.** These coordinates define a polygon similar to polygon **800** in **Figure 8****.** In this example, the geo-spatial key is identified as being a polygon in line **910.** Line **912** indicates that the elements that are affected by this update are ones that intersect the polygon.

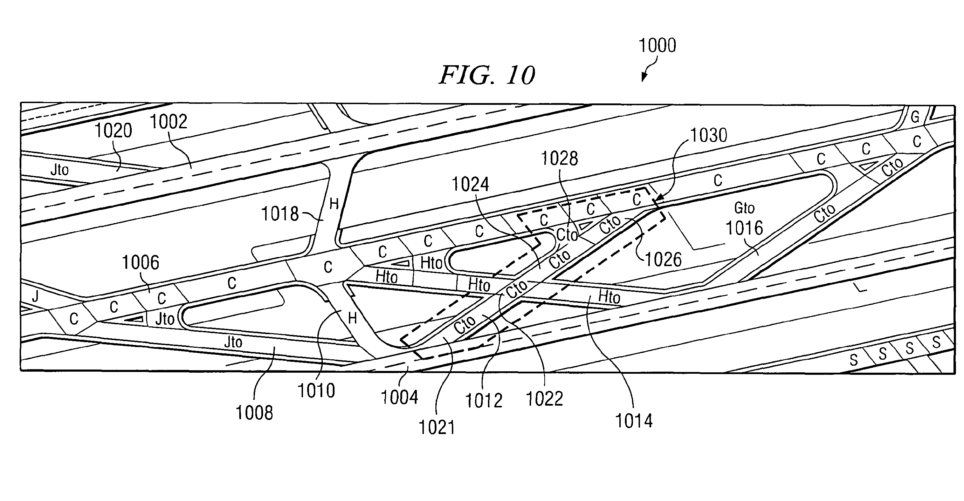

Turning now to **Figure 10****,** a diagram shows a display depicting runways and taxiways in accordance with an advantageous embodiment of the present invention. In this example, display **1000** includes runways **1002** and **1004.** Additionally, this display also includes taxiways **1006, 1008, 1010, 1012, 1014, 1016, 1018,** and **1020.** Taxiway **1012** includes elements **1021, 1022, 1024, 1026,** and **1028.** Polygon **1030** is used to indicate which taxiway elements in taxiway **1012** are closed. In these examples, polygon **1030** encompasses elements **1021, 1022, 1024, 1026,** and **1028.** The closures only apply to elements that are located completely within polygon **1030** in these examples and do not include elements that intersect polygon **1030.**

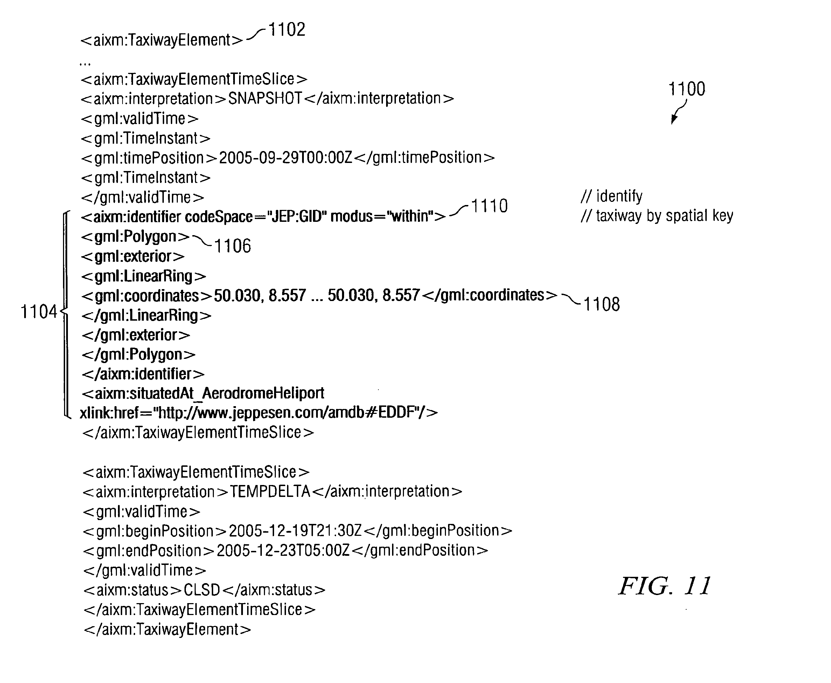

Turning now to **Figure 11****,** a diagram of a data structure containing update information is depicted in accordance with an advantageous embodiment of the present invention. In this example, data structure **1100** takes the form of a XML data structure for an xNOTAM. In this example, line **1102** indicates that the elements affected are taxiway elements. Section **1104** contains the identification information to identify which taxiway elements are affected by this update.

In these examples, the type of key is identified in line **1106** as being a polygon. The coordinates for this polygon are found in **1108.** Line **1110** indicates that only elements that are within the polygon are affected by this update. Additionally, data structure **1100** in this example indicates that only taxiway elements are affected by this update. Thus, if runway elements were encompassed by the polygon, these elements would not be affected in these particular examples.

Of course, depending on the particular implementation, if runway elements also are to be closed, a separate data structure identifying runway elements to be closed may be used containing the same polygon coordinates. In another alternative embodiment, the identification could be global to apply to any airport element encompassed by the polygon in these examples.

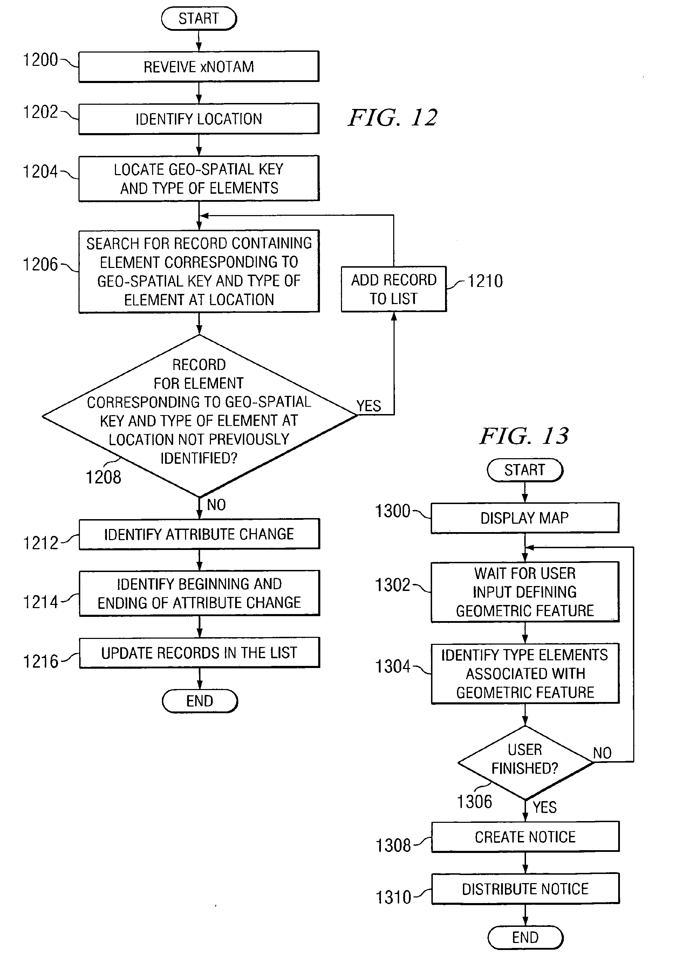

Turning now to **Figure 12****,** a flowchart of a process for updating records in a database is depicted in accordance with an advantageous embodiment of the present invention. The process illustrated in **Figure 12** may be implemented in a database management system, such as database management system **302** to modify records within a database, such as database **304** in **Figure 3****.**

The process begins by receiving an xNOTAM (operation **1200).** The process then identifies the location (operation **1202).** In these examples, the location is an identification of a particular airport. Thereafter, the process locates the geo-spatial key and the type of element affected by the update in the xNOTAM (operation **1204).** The process then searches for a record containing an element corresponding to the geo-spatial key and the type of element at the identified location (operation **1206).**

A determination is made as to whether a record for the element corresponding to the geo-spatial key and the type of element at the location has been found that has not previously been identified (operation **1208).** If such a record is found, the record is added to a list (operation 1210) with the process then turning to operation **1206** as described above.

When no more new records are found in operation 1208, the process then identifies an attribute value change for these elements (operation **1212).** The geocoding of the element may also be considered as a value which may be changed. Additionally, a beginning and ending time for the attribute value change also is identified (operation **1214).** Thereafter, the records in the list are updated with the attribute value change and the beginning and ending time for the attribute value change (operation **1216)** with the process terminating thereafter.

The beginning and ending times for the attribute value change identified in operation **1214** may be used to determine when these changes are applied to the identified elements in the records when queries are made. The application of the changes may be implemented using a number of different mechanisms. For example, the changes may be made directly to the records in the database with the beginning and ending times used to determine when these changes are to be returned with queries and when to remove the changes.

Alternatively, the updates may be stored in a separate set of tables. With this type of implementation, when a query is made, the records for the elements corresponding to the query are identified in the database. Those records are compared to the ones in the temporary tables to determine whether changes should be applied to the response that is to be returned to the requestor.

Turning now to **Figure 13****,** a flowchart of a process for creating a notice containing an update is depicted in accordance with an advantageous embodiment of the present invention. The process illustrated in **Figure 13** may be implemented using a database management system, such as database management system **302** of **Figure 3****.**

The process begins by displaying a map (operation **1300).** In these examples, the map is a map of all or portions of an airport. This map may include, for example, runways, taxiways, and parking stands. Thereafter, the process waits for user input defining a geometric feature (operation **1302).** When this input is received, the type of element associated with the geometric features is identified (operation **1304).**

Next, a determination is made as to whether the user has finished defining geometric features (operation **1306).** If the user has not concluded defining geometric features, the process returns to operation **1302.** Otherwise, the user has to define which attributes of the defined elements have to be modified. After that, the notice is created (operation **1308).** In these examples, the notice is an xNOTAM using extensible markup language. This notice may take the form of data structures, such as those illustrated in **Figures 7****,** **9****,** or **11****.** Thereafter, the notice is distributed (operation **1310)** with the process terminating thereafter.

Although these operations in these examples receive user input to define geometric features, these geometric features may be created by computer implemented processes based on data received indicating what elements are affected.

The flowcharts and block diagrams in the different depicted embodiments illustrate the architecture, functionality, and operation of some possible implementations of apparatus, methods, and computer program products. In this regard, each block in the flowchart or block diagrams may represent a module, segment, or portion of code, which comprises one or more executable instructions for implementing the specified function or functions. In some alternative implementations, the function or functions noted in the block may occur out of the order noted in the figures. For example, in some cases, two blocks shown in succession may be executed substantially concurrently, or the blocks may sometimes be executed in the reverse order, depending upon the functionality involved.

Therefore, the different advantageous embodiments of the present invention provide a computer implemented method, apparatus, and computer usable program code for managing data in a geographic information system database, such as an airport mapping database. When a notice of an update to data is received, an element is located using the notice. This notice includes an update to the data as well as a geometric feature associated with an element in the airport mapping database that is to be updated. When this element is located, the element is updated using the updated data. This geometric feature may be, for example, a line or a polygon. Further, depending on the particular implementation, multiple lines or polygons or a combination of lines and polygons may be used to identify the elements that are to be updated. In this manner, each element in an airport mapping database may be uniquely identified.

Further, although the depicted embodiments are implemented in an airport mapping database, these different features may be implemented for other types of geographic information system databases, such as navigation, obstacle databases or any other aeronautical database with geographic context. For example, these features may be applied to a database that provides for mapping of roadways in a city or state. These features also may be applied to mapping of waterways. The geo-spatial keys may use any sort of geometric feature or combination of geometric features depending on the particular implementation. Additionally, tolerances may be used for features that are not entirely encompassed or exactly intersect a particular element.

The description of the present invention has been presented for purposes of illustration and description, and is not intended to be exhaustive or limited to the invention in the form disclosed. Many modifications and variations will be apparent to those of ordinary skill in the art. Further, different advantageous embodiments may provide different advantages as compared to other advantageous embodiments. The embodiment or embodiments selected are chosen and described in order to best explain the principles of the invention, the practical application, and to enable others of ordinary skill in the art to understand the invention for various embodiments with various modifications as are suited to the particular use contemplated.

## Claims

1. A computer implemented method for managing an airport mapping database, the computer implemented method comprising:
receiving a notice of an update to data relating to a set of elements at an airport, wherein the notice includes a attribute value change for the set of elements, an effective period of time for the attribute value change, and a geometric feature associated with the set of elements in the airport mapping database that is to be updated;
locating the set of elements in the airport mapping database using the geometric feature; and
updating the set of elements using the attribute value change, wherein the attribute value change is reflected in results returned in response to queries made during the effective period of time.

2. The computer implemented method of claim 1, wherein the effective period is permanent and has a beginning time and no ending time.

3. The computer implemented method of claim 1, wherein the locating step comprises:
identifying the set of elements as elements that intersect the geometric feature.

4. The computer implemented method of claim 1, wherein the locating step comprises:
identifying the set of elements as elements that are encompassed by the geometric feature.

5. The computer implemented method of claim 1, wherein the updating step comprises:
creating a record in a temporary table for the set of elements, wherein the temporary table is checked when a query is made to identify recent updates.

6. The computer implemented method of claim 1, wherein the notice is valid for a period of time and wherein the updating step comprises:
applying the update only to a query returning an element in the set of elements during the period of time.

7. The computer implemented method of claim 1, wherein the geometric feature comprises at least one of a point, a line, and polygon.

8. The computer implemented method of claim 1, wherein the geometric feature is defined using a set of coordinates.

9. The computer implemented method of claim 1, wherein the data indicates that the set of elements are unusable for a selected period of time.

10. A system for updating an airport mapping database comprising:
a bus;
a communications unit connected to the bus;
a storage device connected to the bus, wherein the storage device includes computer usable program code; and
a processor unit connected to the bus, wherein the processor unit executes the computer usable program code to receive a notice of an update to data relating to a set of elements at an airport, wherein the notice includes a attribute value change for the set of elements, an effective period of time for the attribute value change, and a geometric feature associated with the set of elements in an airport mapping database that is to be updated; locate the set of elements in the airport mapping database using the geometric feature; and update the set of elements using the attribute value change, wherein the attribute value change is reflected in results returned in response to queries made during the effective period of time.
